# EUROPEAN PATENT APPLICATION

(11) **EP 3 466 817 A1**
(43) Date of publication of application: **10.04.2019**
(21) Application number: 18197939.4
(22) Date of filing: 01.10.2018
(51) Int. Cl.: B64D 27/02, B64D 27/24, B64C 27/12, B64D 31/00

(54) **POWER GENERATION AND DRIVE SYSTEM**

(30) Priority: 03.10.2017 GB 201716105
(71) Applicant: J and M Ferranti Technology Limited, Llanfairfechan LL33 0HS (GB)
(72) Inventor: de Ferranti, James Ziani, Llanfairfechan, LL33 0HS (GB)
(74) Representative: Hamilton, Alistair

(57) **Abstract**

A generator and drive system especially for use in an aircraft is disclosed. The system comprises a permanent magnet machine (20) operable in a drive mode to receive power from an electrical power source and generate a mechanical drive output for use as a backup for a main drive engine (12) of an aircraft. The permanent magnet machine can also operate in a generator mode to receive a mechanical drive input from a primary drive engine of an aircraft and generate electrical power to a power output. The generator and drive system further includes a clutch (22), operable to mechanically disengage the permanent magnet machine from the primary drive engine.

## Description

The present invention relates to an electrical power generation and drive system. It has particular, but not exclusive, application to an electrical power generation system that uses a permanent magnet machine and that can also function as an electrical drive, such as a backup drive for another drive system.

Electrical power generation and drive systems that use permanent magnet machines have known advantages, including saving of space and weight, over systems that use induction machines. These advantages are particularly beneficial in aerospace applications where savings of space and weight are highly sought-after.

However, the use of permanent magnet machines is particularly problematic in aerospace applications. It is essential that the risk an electrical generator and drive system should cause a problem that might threaten flight safety be "extremely improbable", within the meaning of FAA Advisory Circular (AC) AC 25.1309-1; i.e., < 10-9 per flight hour. A main source of risk from an electrical generator and drive system is one of fire, which could occur in the event of failure of circuitry within the system. Where a motor or generator has a magnetic field generated electromagnetically, for example, an induction motor, the system can be rendered safe by de-energisation of the field windings in the event a short circuit is detected. In contrast, a permanent magnet machine will generate output power whenever its mechanical input is turning so cannot be rendered safe in a similar manner. This means that a fault, in particular a short circuit, in output circuitry presents a potential fire risk that cannot be mitigated by operation of electrical safety systems. In systems that serve only as a drive, mechanical isolation can be achieved using a freewheel/sprag clutch, but this is not possible in systems that serve as both a backup drive and a generator.

A further source of risk arising from the electrical generator and drive system is one of mechanical failure. If the electrical generator and drive system fails in a manner that increases the load that it applies to the main drive, it may compromise the operation of the main drive.

An aim of this invention is to provide a backup drive system and generator system that has improved reliability, both in availability and in resistance to unsafe operation, compared with conventional generator and drive systems whilst ensuring system mass is minimum and safety aspects are simple and robust.

From a first aspect, this invention provides a generator and drive system comprising a permanent magnet machine operable in a drive mode to receive power from an electrical power source and generate a mechanical drive output, and in a generator mode to receive a mechanical drive input from a source of mechanical power and generate electrical power to a power output, in which the generator and drive system further includes means to mechanically disengage the permanent magnet machine from the source of mechanical power.

By means of such an arrangement, the system can be rendered safe by disconnecting the permanent magnet machine from the source of mechanical power thereby disconnecting the magnets from the energy source.

In some embodiments of the invention, the clutch may be operated by a mechanincal link, for example including a cable that is connected between the clutch and a user control. Alternatively or additionally, the clutch may be operated by fluid under pressure, typically by a hydraulic system, for example using energy stored in a hydraulic accumulator, or alternatively gas under pressure, or gas generated from a pyrotechnic source. Alternatively or additionally, the clutch may be operated electrically or from stored mechanical energy, for example in springs under tension or compression.

The clutch may be one of a friction clutch, an electromagnetic clutch, a centrifugal clutch or a dog clutch. In the latter case, it may incorporate one or more sets of interengaging splines. The clutch may be capable of disengagement and reengagement. Alternatively, the clutch may be a single-use device, being operable to disengage once and be incapable of subsequent re-engagement. Since it is required to be operated only in an emergency arising from electrical or mechanical failure, there will normally be no reason to re-engage the clutch following disengagement. This may enable the clutch to be implemented in a smaller or lighter package than would be the case if the clutch were to be capable of re-engagement.

Further embodiments of the invention include two or more permanent magnet machines and a respective means to mechanically disengage each of such machines from the source of mechanical power.

Typically, the source of mechanical power is connected to a main power source of a land vehicle, a water vehicle or an aircraft. In embodiments where the drive and generator system is a component of a vehicle or an aircraft, the means to mechanically disengage the generator and drive system from the source of mechanical power may be operated by means of a user-operable control. Alternatively or additionally the means to mechanically disengage the generator and drive system from the source of mechanical power is operated automatically. This is particularly advantageous in systems that include a plurality of permanent magnet machines to reduce the risk of the wrong clutch being operated. In systems that include a single permanent magnet machine, the saving in weight and complexity of a manually-operated system may be more advantageous than automatic operation.

From a second aspect, this invention provides a land vehicle, a water vehicle or an aircraft (e.g., a helicopter) that has a generator and drive system embodying the first aspect of the invention.

Embodiments of the invention will now be described in detail, by way of example, and with reference to the accompanying drawings, in which:
Figure 1 is a block diagram of a power train that includes a generator and drive system being a first embodiment of the invention;
Figure 2 is a block diagram of a power train that includes a generator and drive system being a second embodiment of the invention;
Figure 3 is an end view of generator and drive assembly suitable for use in an embodiment of the invention;
Figure 4 is a section on A-A of Figure 3;
Figures 5 and 6 show Details C and D of Figure 3;
Figure 7 shows a variation of Details D with a modification to the actuator assembly.

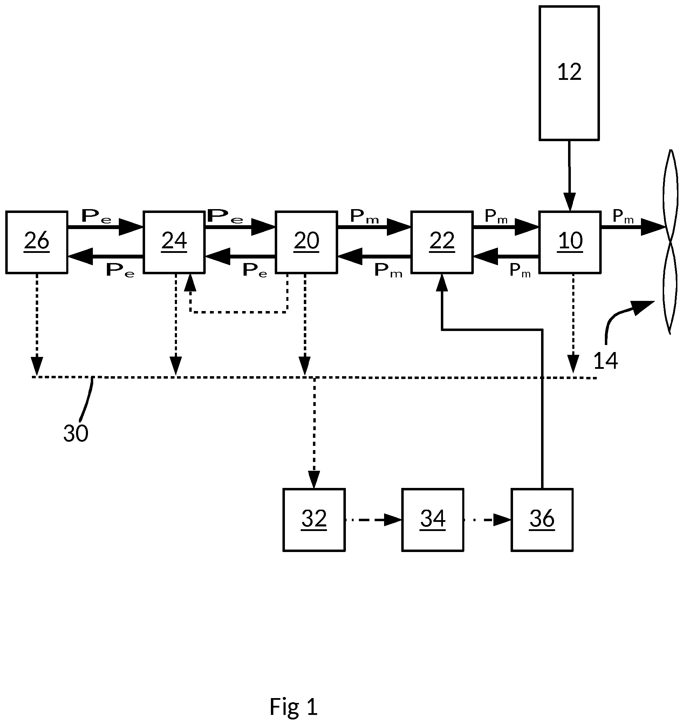

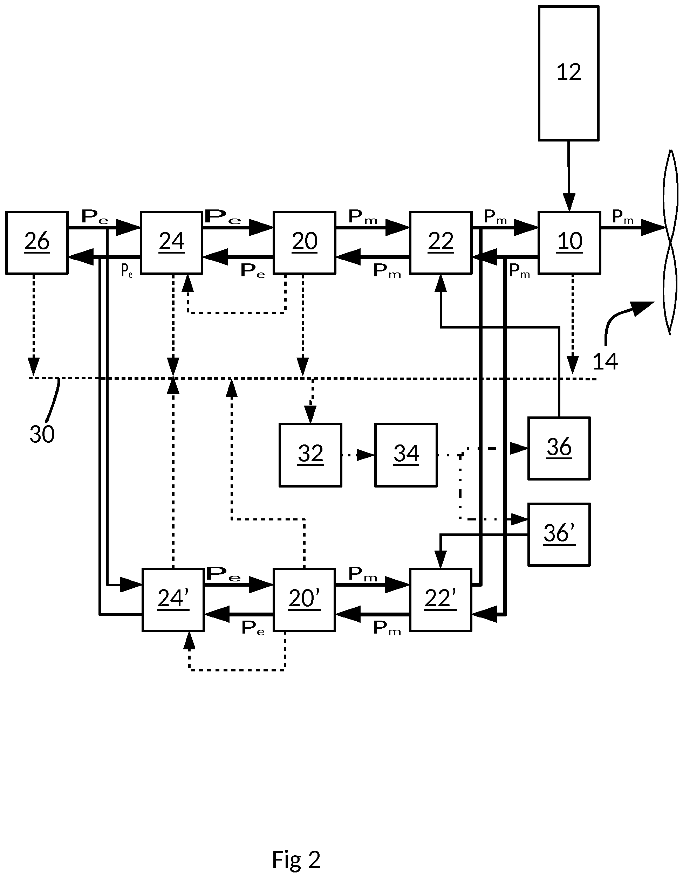

The embodiments of the invention have application to an aeronautical system, most especially for a helicopter, in which it is the primary source of electrical power to the electrical network of the aircraft, and also provides a backup for use in the event of failure of the main drive of the helicopter. However, it will be understood that it has applications in other fields where a generator and a backup drive for a main drive engine is required. These embodiments will now be described with reference to Figures 1 and 2.

In Figure 1, the arrows with solid lines labelled "Pₘ" indicate flow of mechanical power in the direction of the arrow between components, and the arrows labelled "Pₑ" indicate flow of electrical power in the direction of the arrow between components

The system includes a main gearbox 10 that has a main drive input that is connected to a primary drive engine 12. The main gearbox has an output that drives a rotor 14 and other powered flight components. During normal flight operation, the aircraft is powered by the primary drive engine through the main gearbox 10.

The drive system further comprises a permanent magnet motor/generator 20. The motor/generator 20 is mechanically connected to a secondary shaft of the main gearbox 10 through a clutch 22. The motor/generator 20 is electrically connected through a motor/generator control unit 24 to an aircraft electrical network 26 (and/or, optionally, a battery) and optionally through contactors.

During normal flight operation, mechanical power is delivered from the main gearbox 10 through the clutch 22 to the motor/generator 20, which in this mode of operation functions as an electrical generator. This allows the motor/generator 20 to supply electrical power to the aircraft electrical network 26 (and/or charge a battery, as the case may be) optionally connected through contactors. In the event of failure of the primary drive engine 12, the flow of electrical energy is reversed, power being delivered through the motor/generator control unit 24 to the motor/generator 20, which, in this mode of operation, functions as an electric motor. Mechanical energy is delivered from the motor/generator 20, through the clutch 22, to the main gearbox 10, and then to the rotor 14. In this way, power to the rotor 14 can be maintained following failure of the primary drive engine 12.

Each of the main gearbox 10, the motor/generator 20, the motor/generator control unit 24 and the aircraft electrical network 26 are electrically connected to apply telemetric signals to a signal bus 30 that transmits them to an avionic diagnostic system 32. These signals may encode relevant operational parameters of the components that generate them, including, for example, operating voltage and/or current, operating temperature and operating speed. They may also include a binary operational/fail signal.

In the event that the diagnostic system identifies that a dangerous failure has occurred in the motor/generator 20 or the motor/generator control unit 24, it initiates an alarm. This is presented as an audible and/or visual signal to a pilot 34 operating the aircraft. The pilot may then decide to operate a control 36 that serves to disengage the clutch 22, to mechanically disconnect the motor/generator 20, which will promptly cease to rotate.

This guards against two main types of failure.
- Electrical failures in which continuing electrical output from the motor/generator 20 could present a risk. For example, a short-circuit in the motor/generator control unit 24 which, if fed with electrical power, could lead to a fire.
- Mechanical failures in which continuing mechanical drive to the motor/generator 20 could present a risk. For example, a failure in a bearing within the motor/generator 20 could impose additional load on the main gearbox 10 leading to failure of the gearbox, or heat generated within the failed bearing could lead to a fire.

It will be understood that once the clutch 22 has been disengaged, electrical generating capacity within the aircraft will be reduced or lost, which may mean that the aircraft must rely upon a finite reserve of stored electrical energy, and must therefore aim to land quickly.

In order to mitigate the consequences of having to operate the clutch 22 to disconnect the motor/generator 20, the clutch 22, motor/generator 20 and the motor/generator control unit 24 may be duplicated, to provide a system as shown in Figure 2. In such a system, if a failure occurs in one motor/generator 20 or the motor/generator control unit 24, the corresponding clutch 22 can be disengaged, and the other motor/generator 20' can remain in service.

In this case, it is preferable that the two controls 36, 36' are physically separated from one another, and are each close to a respective visual warning device. This is to minimise the likelihood of the pilot disengaging the wrong clutch 22/22'.

In a modification of either embodiment, the appropriate clutch 22/22' may be operated automatically.

Power to drive the motor/generator 20 as a motor in the event of failure of a primary drive motor may be provided using a system as disclosed in UK Patent Application GB2544097 of the present applicant, the contents of which are incorporated into this application by reference.

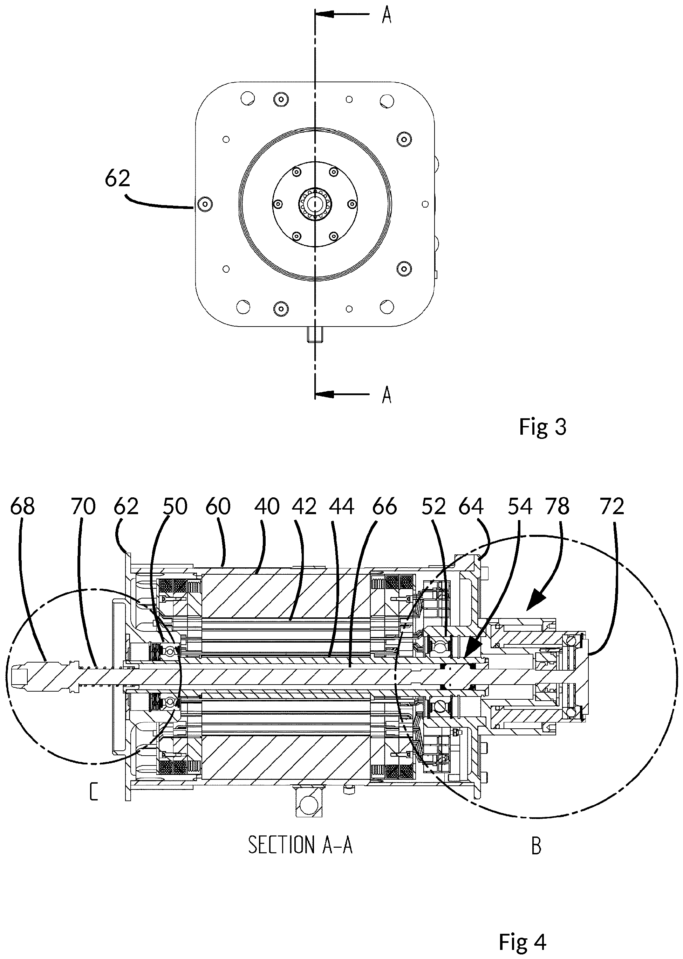

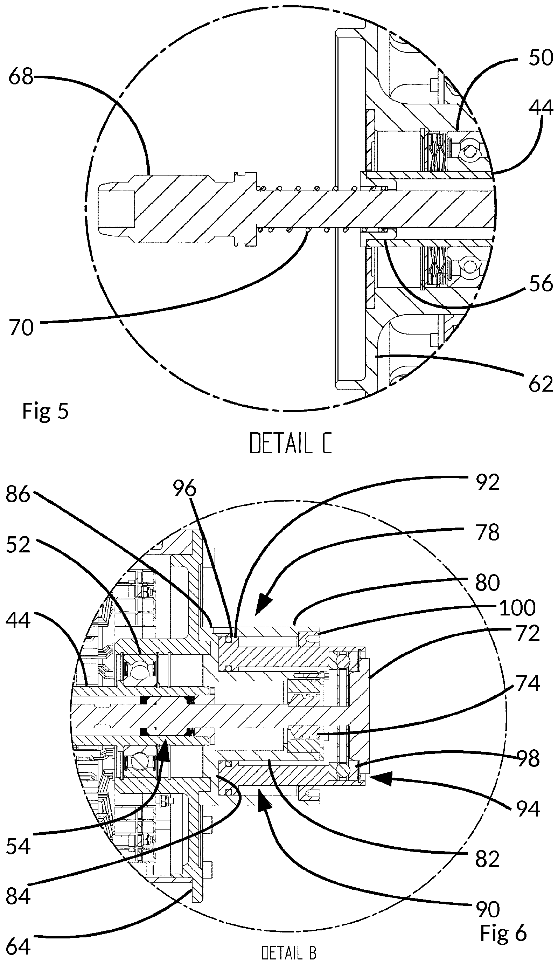

Figures 3 to 6 show a generator and drive assembly suitable for use in an embodiment of the invention.

The generator and drive assembly has casing comprising a tubular body 60 that has a front end plate 62 and a rear end plate 64.

Within the body, the assembly includes a permanent magnet machine operable as a motor or a generator that has a stator 40 within which a rotor 42 is carried on a tubular outer shaft 44 that extends coaxially with a machine axis. The outer shaft 44 is carried on bearings 50, 52 in the end plates 62, 64 for rotation about the machine axis. The stator 40 includes windings and the rotor 42 includes permanent magnets, such that it can act as a generator or a motor, being turned by or by delivering turning torque to the outer shaft 44. Close to an inner end of the outer shaft 44, internal splines are formed within the outer shaft, indicated at 54.

An inner shaft 66 extends coaxially with the machine axis through the outer shaft 44. The inner shaft 66 carries external splines which, when the inner shaft 66 is in its driving position (as shown in the drawings), interengage with the splines 54 of the outer shaft 44, thereby causing the inner and outer shafts 66, 44 to rotate together. A front end of the inner shaft 66 carries a spacer 56 that fills the annular space between the inner and outer shafts 66, 44. The spacer 56 includes an outer flange that restricts the extent to which it can enter the outer shaft 44 and an inner flange that makes contact with the inner shaft 44.

Front and rear end portions of the inner shaft 66 project from the casing through the end plates 62, 64. The front end portion carries a coupling spline 68 that is suitable for connection with a corresponding coupling to a main drive (not shown). A compression spring 70 surrounds the inner shaft 66, extending between the coupling spline 68 and the inner flange of the spacer 56. The rear end portion of the inner shaft 66 carries a radially extending head 72 and a resolver 74 that detects rotation of the inner shaft 66.

An actuator assembly is carried on the rear end plate 64. The actuator assembly includes a body 78. The body 78 has an outer cylindrical wall 80 which surrounds an inner cylindrical wall 82. An annular base 84 extends between the inner and outer cylindrical walls 82, 80 to create an annular well. An inlet port 86 extends transversely through the outer cylindrical wall 30 close to the base 84.

A piston 90 is disposed within the body 78. The piston 90 is generally cylindrical, with a flange 92 at a front end and a recess 94 at a rear end. An o-ring seal 96 is carried within a groove formed in the flange 92. The recess is formed by a counterbore into an end part of the piston, and has an annular transverse base surface. A thrust bearing 98 is located within the recess 94 with a first race in contact with the transverse base surface, and a second race facing the head 72 of the inner shaft 66. In the driving position, the flange 92 of the piston 90 is in contact with the base 84 of the actuator body 78, the o-ring seal 96 is to the rear of the inlet port 86, and the second race of the thrust bearing 98 is close to but spaced from the head 72. A stop 100 is provided on the outer wall 80 that serves to interact with the flange 92 to prevent removal of the piston 90 from the body 78.

The compression spring 70 urges the inner shaft 66 towards the drive position in which the coupling spline 68 engages with the main drive and the splines 54 of the inner and outer shafts 66, 44 are engaged. Therefore, in this condition, drive is transferred between the outer shaft 44 and the main drive, so the permanent magnet machine is coupled to the main drive. Spacing between the thrust bearing 98 and the head 72 ensures that, in the driving position, no components other than the inner shaft 66, the outer shaft 66 and components connected directly thereto are driven mechanically, so the actuator assembly does not present an additional load, nor an additional point of failure. Moreover, the bearing 98 need not be specified for continuous operation since it rotates only briefly when actuating the inner shaft.

In the event a failure is detected that indicates that the magnetic machine or an associated component has failed in a dangerous way, a disconnection control is operated by (for instance) a pilot of an aircraft in which the system has been installed. The effect of this is to deliver hydraulic fluid under pressure to the inlet port 86. This, in turn, urges the piston 90 and the bearing 98 rearward, until the second race of the bearing 98 makes contact with the head 72, the bearing accommodating rotational movement of the inner shaft 66. Further movement of the piston 90 will cause the entire inner shaft 66 to move rearward until one or both set of splines 54, 68 disengage, disconnecting drive from the outer shaft 44, thereby removing drive from the permanent magnet machine. In addition, the coupling splines 68 disengage. In this state, the inner shaft 66 and therefore the bearing 98 also cease to rotate. Movement of the inner shaft 66 continues until it is prevented by the stop 100.

The system may be operated in a test mode, in which hydraulic fluid under pressure is delivered to the inlet port 86, causing the piston 90 to start to move as described above. A sensor is provided that is triggered when the piston has moved by a distance less than that required to completely disengage the splines 54, 68 to confirm that the actuator is operational. Once movement has been confirmed by the sensor, pressure is removed, and the piston 90 and inner shaft 66 are returned to the drive position by the compression spring 70.

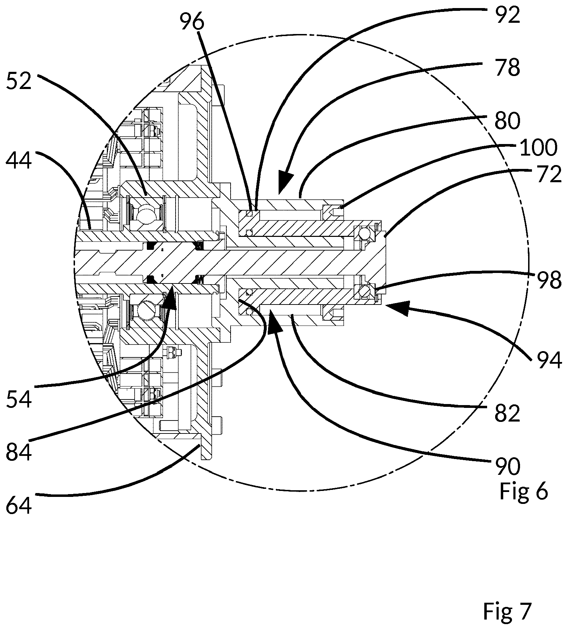

Figure 7 shows a minor variation in the embodiment of Figures 3 to 6. The resolver 74 is omitted, which allows components of the actuator, including, but not limited to the body 78, the piston 90, the bearing 98 and the head 72 to be reduced in size. If need be, a resolver can be incorporated elsewhere, for example, in the permanent magnet machine.

## Claims

1. A generator and drive system for use in an aircraft comprising a permanent magnet machine (20) operable in a drive mode to receive power from an electrical power source and generate a mechanical drive output for use as a backup for a main drive engine (12) of an aircraft, and in a generator mode to receive a mechanical drive input from a primary drive engine of an aircraft and generate electrical power to a power output, **characterised in that** the generator and drive system further includes a clutch (22), operable to mechanically disengage the permanent magnet machine from the primary drive engine.

2. A generator and drive system according to claim 1 in which the clutch can be operated by a mechanical link.

3. A generator and drive system according to claim 1 or claim 2 in which the clutch can be operated by fluid under pressure.

4. A generator and drive system according to any preceding claim in which the clutch is a friction clutch.

5. A generator and drive system according to any one of claims 1 to 4 in which the clutch is a dog clutch.

6. A generator and drive system according to claim 5 in which the clutch incorporates interengaging splines (54).

7. A generator and drive system according to any preceding claim in which the clutch is capable of disengagement and reengagement.

8. A generator and drive system according to any one of claims 1 to 6 in which the clutch is a single-use device, being operable to disengage once and be incapable of subsequent re-engagement.

9. A generator and drive system according to any preceding claim including two or more permanent magnet machines and a respective means to mechanically disengage each of such machines from the source of mechanical power.

10. An aircraft that incorporates a generator and drive system according to any preceding claim.

11. An aircraft according to claim 10 in which the generator and drive system is connected to a main drive (12) of the aircraft.

12. An aircraft according to claim 10 or claim 11 in which the clutch is operable by means of a user-operable control (36).

13. An aircraft according to claim 11 or claim 12 in which the clutch is operable automatically.

14. An aircraft according to any one of claims 10 to 13 being a helicopter.
